# EUROPÄISCHE PATENTSCHRIFT

(11) **EP 3 924 407 B1**
(45) Veröffentlichungstag und Bekanntmachung des Hinweises auf die Patenterteilung: **08.07.2026**
(21) Anmeldenummer: 20705913.0
(22) Anmeldetag: 13.02.2020
(51) Int. Cl.: C08J 7/06, H01B 1/12

(54) **VERFAHREN ZUM HYDROPHILIEREN EINES HALBZEUGELEMENTS UND DADURCH HERGESTELLTES ELEKTRODENELEMENT, BIPOLARELEMENT ODER WÄRMETAUSCHERELEMENT**
METHOD FOR HYDROPHILICIZING A SEMIFINISHED ELEMENT, AND ELECTRODE ELEMENT, BIPOLAR ELEMENT OR HEAT EXCHANGER ELEMENT PRODUCED THEREBY
PROCÉDÉ D'HYDROPHILISATION D'UN ÉLÉMENT SEMI-FINI ET ÉLÉMENT D'ÉLECTRODE, ÉLÉMENT BIPOLAIRE OU ÉLÉMENT D'ÉCHANGEUR DE CHALEUR AINSI PRODUIT

(30) Priorität: 13.02.2019 DE 102019103542
(43) Veröffentlichungstag der Anmeldung: 22.12.2021
(73) Patentinhaber: Fraunhofer-Gesellschaft zur Förderung der angewandten Forschung e.V., 80686 München (DE)
(72) Erfinder: KOPIETZ, Lukas, 47198 Duisburg (DE); BURFEIND, Jens, 46047 Oberhausen (DE); DOETSCH, Christian, 46045 Oberhausen (DE); GREVÉ, Anna, 45136 Essen (DE); SCHWERDT, Peter, 46535 Dinslaken (DE)
(86) Internationale Anmeldenummer: PCT/EP2020/053710
(87) Internationale Veröffentlichungsnummer: WO 2020/165314

(56) Entgegenhaltungen:
- EP-A1- 2 487 739
- EP-A1- 2 560 228
- US-A1- 2008 149 900
- US-B2- 8 956 785

## Beschreibung

Die Erfindung betrifft ein Verfahren zum Hydrophilieren eines Halbzeugelements, insbesondere Elektrodenelements, Bipolarelements und/oder Wärmetauscherelements, aus einem Kunststoffmaterial oder Kunststoffverbundmaterial enthaltend wenigstens einen thermoplastischen und/oder wenigstens einen duroplastischen Kunststoff. Ferner betrifft die Erfindung ein Verfahren zum Herstellen eines Elektrodenelements, insbesondere einer Elektrodenplatte, eines Bipolarelements, insbesondere einer Bipolarplatte, und/oder eines Wärmetauscherelements, insbesondere eines Wärmetauscherrohrs oder einer Wärmetauscherplatte, aus einem Halbzeugelement. Zudem betrifft die Erfindung ein Elektrodenelement hergestellt nach Anspruch 12 oder 13 sowie eine elektrochemische Zelle mit einem Elektrodenelement nach Anspruch 14.

Elektrodenelemente und Bipolarelemente bedürfen einer hinreichenden elektrischen Leitfähigkeit, weshalb bekannte Elektrodenelemente und Bipolarelemente entweder aus einem metallischen Werkstoff oder einem Verbundwerkstoff mit wenigstens einer elektrisch leitfähigen Komponente gebildet werden. Bei Wärmetauscherelementen ist dagegen eine elektrische Leifähigkeit normalerweise entbehrlich. Allerdings besteht hier der Bedarf einer hohen thermischen Leitfähigkeit. Da Materialien mit einer hohen elektrischen Leitfähige meist auch Wärme gut leiten, sind Wärmetauscherelemente ebenfalls oft aus einem metallischen Werkstoff oder einem Verbundwerkstoff mit wenigstens einer elektrisch leitfähigen Komponente gebildet. Eine weitere Gemeinsamkeit zwischen Elektrodenelementen und Bipolarelementen einerseits sowie Wärmetauscherelementen andererseits besteht darin, dass sowohl die Wärme als auch die elektrische Leitung aufgrund der entsprechenden Leitungswiderstände möglichst gleichmäßig verteilt über den gesamten Querschnitt des jeweiligen Elements geleitet werden sollte. Werden Verbundwerkstoffe zur Herstellung der entsprechenden Bauteile verwendet, die aus welchen Gründen auch immer eine nicht unerhebliche Menge an Kunststoff aufweisen, werden in dem Kunststoff typischerweise feine, leitfähige Partikel verteilt, um für die notwendige elektrische oder thermische Leitfähigkeit sorgen. Bei den entsprechenden Verbundwerkstoffen wird dann meist eine Matrix aus wenigstens einem Kunststoff oder einem Gemisch von Kunststoffen gebildet, in der die leitfähigen Partikel fein verteilt aufgenommen sind. Diese Matrix bildet mithin die kontinuierliche Phase, in der fein verteilt und möglichst homogen die leitfähigen Partikel dispergiert sind. Bei den leitfähigen Partikel handelt es sich beispielsweise um metallische oder kohlenstoffbasierte Partikel, da diese Materialien eine gegenüber dem wenigstens einen Kunststoff erhöhte elektrische und thermische Leitfähigkeit aufweisen.

Bei Halbzeugelementen etwa in Form von Elektrodenelementen, Bipolarelementen und Wärmetauscherelementen, die aus einem Verbundmaterial gebildet werden, dessen kontinuierliche Phase wenigstens einen Kunststoff aufweist, besteht teilweise das grundsätzliche Problem einer begrenzten Benetzbarkeit der Oberfläche für Wasser oder wässrige Medien. Dies ist insbesondere bei der Verwendung hydrophober Kunststoffe zur Bildung der Halbzeugelemente der Fall, wobei zu beachten ist, dass die meisten gebräuchlichen thermoplastischen und duroplastischen Kunststoffe verhältnismäßig hydrophob sind. Wenn die Füllstoffpartikel ebenfalls hydrophob sind, was regelmäßig bei kohlenstoffbasierten Füllstoffpartikeln der Fall ist, verstärkt sich das Problem der begrenzen Benetzbarkeit für wässrige Medien noch. Hydrophobe Oberflächen haben nämlich die Tendenz Wasser oder wässrige Medien abzustoßen bzw. die Kontaktfläche zwischen der Oberfläche und dem Wasser bzw. dem wässrigen Medium zu verkleinern, während Wasser oder wässrige Medien angezogen werden und sich so flächig auf der Oberfläche ausbreiten, also die Oberfläche benetzen.

Eine gute Benetzbarkeit für wässrige Medien ist für Elektrodenelemente und Bipolarelemente von besonderer Bedeutung, da diese Halbzeugelemente in möglichst vollflächigen Kontakt mit hydrophilen Elektrolyten gelangen sollen. Gleiches ist für Wärmetauscherelemente der Fall, die Wärme von einem wässrigen Medium aufnehmen und/oder an ein wässriges Medium abgeben sollen. Ein solcher vollflächige Kontakt kann zwar grundsätzlich auch bei hydrophoberen Materialen durch eine geeignete Handhabung der Elektrolyte bzw. des wenigstens einen am Wärmetausch beteiligten Mediums erreicht werden. Es kommt dann aber trotzdem zu erhöhten Übergangswiderständen an der Grenzfläche zwischen dem Elektrodenelemente, dem Bipolarelemente oder dem Wärmetauscherelement einerseits und dem angrenzenden wässrigen Medium andererseits, die sich letztlich als Leitungs- oder Übergangswiderstände an den entsprechenden Grenzflächen für die Leitung des elektrischen Stroms oder für die Leitung der zu übertragenden Wärme bemerkbar machen.

Die Benetzbarkeit bzw. die hydrophilen Eigenschaften von Halbzeugen sind insbesondere dann von Bedeutung, wenn die Halbzeuge zur Bildung von Elektrodenelementen, Bipolarelementen oder Wärmetauscherelementen vorgesehen sind. Dabei kommen Elektrodenelemente bzw. Bipolarelemente beispielsweise in elektrochemischen Zellen wie Brennstoffzellen oder Redox-Flow-Batterien zu Einsatz.

Redox-Flow-Batterien sind bereits in verschiedenen Ausführungen bekannt. Solche Ausführungen sind beispielhaft in der AT 510 250 A1 und der US 2004/0170893 A1 beschrieben. Ein wichtiger Vorteil der Redox-Flow-Batterien liegt in ihrer Eignung, sehr große Mengen an elektrischer Energie speichern zu können. Die Energie wird dabei in Elektrolyten gespeichert, die platzsparend in sehr großen Tanks bereitgehalten werden können. Die Elektrolyte weisen meist metallische Ionen unterschiedlicher Oxidationsstufen auf. Zur Entnahme von elektrischer Energie aus den Elektrolyten oder zum Wiederaufladen derselben werden die Elektrolyte durch sogenannte elektrochemische Zellen gepumpt. Die Zellen werden dabei aus zwei Halbzellen gebildet, die über eine Membran voneinander getrennt sind und jeweils einen Zellinnenraum, einen Elektrolyt und eine Elektrode bzw. eine Bipolarplatte umfassen. Die Membran ist semipermeabel und hat die Aufgabe, Kathode und Anode einer elektrochemischen Zelle räumlich und elektrisch voneinander zu trennen. Dazu muss die Membran für bestimmte Ionen durchlässig sein, welche die Umwandlung der gespeicherten chemischen Energie in elektrische Energie bewirken. An den Elektroden bzw. Bipolarplatten der Zelle laufen Redox-Reaktionen ab, wobei von den Elektrolyten an einer Elektrode Elektronen freigesetzt und an der anderen Elektrode Elektronen aufgenommen werden. Die metallischen und/oder nichtmetallischen Ionen der Elektrolyte bilden Redox-Paare und erzeugen folglich ein Redox-Potential. Als Redox-Paare kommen beispielsweise Eisen-Chrom, Polysulfid-Bromid, Vanadium oder andere Schwermetalle in Frage. Diese oder auch andere Redox-Paare können grundsätzlich in wässriger oder nichtwässriger Lösung vorliegen. Als Elektrolyte kommen aber auch redoxaktive organische Stoffe, wie beispielsweise Anthrachinon, in Frage.

Die Elektroden einer Zelle, zwischen denen sich infolge der Redoxpotentiale eine Potentialdifferenz ausbildet, sind außerhalb der Zelle, z.B. über einen elektrischen Verbraucher, elektrisch miteinander verbunden. Während die Elektronen außerhalb der Zelle von einer Halbzelle zur anderen gelangen, treten Ionen der Elektrolyte durch die Membran direkt von einer Halbzelle zur anderen Halbzelle über. Zum Wiederaufladen der Redox-Flow-Batterie kann an die Elektroden der Halbzellen anstelle des elektrischen Verbrauchers, beispielsweise mittels eines Ladegeräts, eine Potentialdifferenz angelegt werden, durch welche die an den Elektroden der Halbzellen ablaufenden Redox-Reaktionen umgekehrt werden.

Bedarfsweise wird eine Mehrzahl gleichartiger Zellen in einer Redox-Flow-Batterie zusammengefasst. Meist werden die Zellen dazu aufeinandergestapelt, weshalb man die Gesamtheit der Zellen auch als Zellstapel oder Zellstack bezeichnet. Die einzelnen Zellen werden meist parallel zueinander von den Elektrolyten durchströmt, während die Zellen meist elektrisch hintereinander geschaltet werden. Die Zellen sind also meist hydraulisch parallel und elektrisch in Reihe geschaltet. In diesem Fall ist der Ladungszustand der Elektrolyte in jeweils einer der Halbzellen des Zellstapels gleich.

Während Elektrodenelemente bzw. Bipolarelemente von elektrochemischen Zellen, insbesondere zur Bildung von Zellstacks, der Einfachheit halber plattenförmig ausgebildet sind, kommen bei Wärmetauscherelementen insbesondere plattenförmige und rohrförmige Wärmetauscherelemente in Frage. Plattenwärmetauscher und Rohrbündelwärmetuischer unter Verwendung entsprechender Wärmetauscherelemente sind in unterschiedlichen Ausgestaltungen bekannt.

Vor dem bereits beschriebenen Hintergrund der teilweise mangelnden Benetzbarkeit oder Hydrophilie der verwendeten Halbzeuge, insbesondere der Elektrodenelemente, Bipolarelemente oder Wärmetauscherelemente, sind unterschiedliche Methoden zur Hydrophilierung von Oberflächen der Halbzeugelemente vorgeschlagen worden. So ist beispielsweise eine chemische Oberflächenbehandlung bekannt, bei der die Oberflächen mit verdünnten Säuren angelöst werden. Man spricht hierbei auch vom Beizen der Oberflächen, das zum Anlagern hydrophiler Gruppen, etwa von Oxidgruppen oder Oxylgruppen, führt, so dass die Oberfläche insgesamt hydrophiler wird und damit besser benetzt werden kann. Des Weiteren ist es bekannt, die Oberflächen der Bauteile zu Fluorieren, wobei Fluor unter hohem Druck und erhöhter Temperatur in den Oberflächen abgelagert wird. Die Fluoratome führen an der Oberfläche der Bauteile lokal zu vielen kleinen Ladungsverschiebungen, wodurch die Oberfläche insgesamt hydrophiler wird. Die Oberflächen entsprechender Bauteile können alternativ auch in Kontakt mit einer Plasma- oder Coronastrahlung gebracht werden. Das entsprechende Beschießen der Oberfläche mit elektrischer Ladung regt die Oberfläche zu einer chemischen Änderung der Oberflächenstruktur an, die hydrophiler ist als die ursprüngliche Oberflächenstruktur.

All diese Verfahren haben jedoch den Nachteil, dass sie sehr aufwendig und damit teuer sind. Hinzu kommt, dass die Oberflächenbehandlung zu einer Änderung des Gefüges, insbesondere zu einer unerwünschten Kristallisation oder Nachkristallisation an der Oberfläche des Kunststoffes führt. Der Grund hierfür ist beispielsweise die Wärmeeinwirkung auf die Bauteiloberfläche und/oder die chemische Modifikation der Oberflächenstruktur. Eine übermäßige Kristallisation des Kunststoffs an der Bauteiloberfläche wirkt sich regelmäßig ungünstig auf die mechanischen Eigenschaften der Bauteile aus.

Daher liegt der vorliegenden Erfindung die Aufgabe zugrunde, das eingangs genannte und zuvor näher beschriebene Verfahren derart auszugestalten und weiterzubilden, dass die Benetzbarkeit der Bauteiloberfläche für wässrige Medien mit geringeren Gefügeänderungen, mit geringeren Kosten und mit einem geringeren Aufwand gesteigert werden kann.

Diese Aufgabe ist gemäß Anspruch 1 gelöst durch ein Verfahren zum Hydrophilieren eines Halbzeugelements, insbesondere Elektrodenelements, Bipolarelements und/oder Wärmetauscherelements, aus einem Kunststoffmaterial oder Kunststoffverbundmaterial enthaltend wenigstens einen thermoplastischen und/oder wenigstens einen duroplastischen Kunststoff,
- bei dem das Hydrophilieren wenigstens teilweise durch Aufbringen von Kohlenstoffpartikeln wenigstens bereichsweise auf wenigstens eine Oberfläche des Halbzeugelements bewirkt wird und
- bei dem die Kohlenstoffpartikeln durch Einreiben, Druckgasstrahlen und/oder durch Elektrostatik derart wenigstens bereichsweise auf die wenigstens eine Oberfläche aufgebracht werden, dass die Kohlenstoffpartikel an der Oberfläche haften bleiben.

Die genannte Aufgabe ist zudem gemäß Anspruch 12 gelöst durch ein Verfahren zum Herstellen eines Elektrodenelements, insbesondere einer Elektrodenplatte, eines Bipolarelements, insbesondere einer Bipolarplatte, und/oder eines Wärmetauscherelements, insbesondere eines Wärmetauscherrohrs oder einer Wärmetauscherplatte, aus einem Halbzeugelement,
- bei dem ein nach einem der Ansprüche 1 bis 11 hydrophiliertes Halbzeugelement zu einem Elektrodenelement, insbesondere einer Elektrodenplatte, einem Bipolarelement, insbesondere einer Bipolarplatte, und/oder einem Wärmetauscherelement, insbesondere einem Wärmetauscherrohr oder einer Wärmetauscherplatte, weiterverarbeitet wird und/oder
- bei dem ein Halbzeugelement zu einem Elektrodenelement, insbesondere einer Elektrodenplatte, einem Bipolarelement, insbesondere einer Bipolarplatte, und/oder einem Wärmetauscherelement, insbesondere einem Wärmetauscherrohr oder einer Wärmetauscherplatte, weiterverarbeitet und anschließend nach einem der Ansprüche 1 bis 11 hydrophiliert wird.

Die zuvor genannte Aufgabe ist zudem gemäß Anspruch 14 gelöst durch ein Elektrodenelement, insbesondere Elektrodenplatte, Bipolarelement, insbesondere Bipolarplatte, und/oder Wärmetauscherelement, insbesondere Wärmetauscherrohr oder Wärmetauscherplatte, hergestellt nach Anspruch 12 oder 13.

Im Übrigen ist die zuvor genannte Aufgabe gemäß Anspruch 15 gelöst durch eine elektrochemische Zelle, insbesondere Redox-Flow-Batterie, mit einem Elektrodenelement, insbesondere Elektrodenplatte, oder mit einem Bipolarelement, insbesondere Bipolarplatte, nach Anspruch 14.

Die Erfindung hat also erkannt, dass die Oberfläche eines Halbzeugelement, insbesondere eines Elektrodenelements, Bipolarelements und/oder Wärmetauscherelements, hydrophiliert werden kann, indem die Oberfläche mit einem hydrophoben, kohlenstoffbasierten, partikelförmigen Material, das vorliegend auch allgemein als Kohlenstoffpartikel bezeichnet wird, behandelt wird. Da diese Kohlenstoffpartikel, wie beispielsweise Ruß oder Graphit, sehr günstig sind und auch das Behandeln der Oberfläche mit den kohlenstoffbasierten Materialien sehr einfach durch Einreiben, Druckgasstrahlen und/oder durch Elektrostatik erfolgen kann, bedarf es zur Hydrophilierung der Oberfläche weder aufwendiger Verfahren noch teuer Materialien. Hinzu kommt, dass die Oberfläche außer mit den Kohlenstoffpartikeln mit keinen weiteren aggressiven oder die Oberflächenstruktur anderweitig modifizierenden Chemikalien behandelt werden muss. Ebenso bedarf die Behandlung der Oberfläche mit Kohlenstoffpartikeln keiner Temperaturerhöhung des Bauteils. Die Behandlung der Oberfläche erfolgt mithin vorzugsweise bei Raumtemperatur.

Unter dem Begriff "hydrophil" wird vorliegend eine relative Materialeigenschaft im Vergleich zu der unbehandelten Oberfläche verstanden, wobei sich Wasser oder ein wässriges Medium leicht auf der Oberfläche ausbreitet, insbesondere wenn diese eben und horizontal ausgerichtet ist. Die "Hydrophilierung" wird dementsprechend als Maßnahme verstanden, welche einer Oberfläche im Vergleich zur unbehandelten Oberfläche hydrophile bzw. hydrophilere Eigenschaften verleiht. Die "Benetzbarkeit" bzw. "Befeuchtbarkeit" beringt dabei zum Ausdruck wie leicht Wasser oder ein wässriges Medium an der Oberfläche des Bauteils angrenzende Luft verdrängt. Die Benetzbarkeit einer Oberfläche kann durch die Messung des Kontaktwinkels oder des Winkels, der an der Kontaktlinie zwischen einem Tropfen und einer Fläche gebildet wird, kategorisiert werden. Bei Kontaktwinkeln von weniger als 90 Grad wird eine Oberfläche allgemein als hydrophil betrachtet und bei denjenigen Winkeln von größer als 90 Grad allgemein als hydrophob bezeichnet.

Die Messung des Kontaktwinkels von Flüssigkeiten auf festen Oberflächen erfolgt entweder statisch oder dynamisch. Statische Kontaktwinkel werden typischerweise an gegenüberliegenden Seiten eines ruhenden Tropfens gemessen.

Dynamische Kontaktwinkel können mit unterschiedlichen Verfahren gemessen werden, insbesondere mit dem Wilhelmy-Verfahren, das eine Tauchmethode verwendet, um Fortschreite- und Rückzugskontaktwinkel zu bestimmen. Die Oberfläche wird dabei in Wasser oder eine wässrige Flüssigkeit bzw. ein wässriges Medium getaucht und der Kontaktwinkel bestimmt, wenn die Oberfläche in die Flüssigkeit eingetaucht (Fortschreitekontaktwinkel) oder wenn die Oberfläche aus der wässrigen Flüssigkeit bzw. dem wässriges Medium herausgezogen wird (Rückzugskontaktwinkel).

Die Kohlenstoffpartikel, die wie zuvor erwähnt wenigstens im Wesentlichen aus Kohlenstoff bestehen, also durch reinen Kohlenstoff gebildet sein können aber nicht müssen, können bedarfsweise durch Einreiben auf die zu behandelnde Oberfläche aufgebracht werden, dies geschieht der besseren Reproduzierbarkeit und Einstellbarkeit halber vorzugsweise maschinell, durch einen Stempel, Teller oder dergleichen, der mit einem vorgegebenen Druck und mit vorgegebener Bewegung über die Oberfläche bewegt wird. Dabei können die einzureibenden Kohlenstoffpartikel vor dem Einreiben und/oder während dessen Einreibens auf die Oberfläche aufgebracht, insbesondere aufgestreut, werden.

Alternativ oder zusätzlich können die Kohlenstoffpartikel auch im Wege des Druckgasstrahlens auf die zu behandelnde Oberfläche aufgebracht werden. Die Kohlenstoffpartikel werden dabei mittels eines Trägergases pneumatisch auf die zu behandelnde Oberfläche geschossen. Das Trägergas wird dabei der Einfachheit halber bevorzugt Luft sein. Unter Verwendung von Luft spricht man auch von Druckluftstrahlen. Diese Verfahren sind unter Verwendung von Sand anstelle von Kohlenstoffpartikeln etwa als sogenanntes Sandstahlen in verschiedenen Ausgestaltungen bekannt.

Eine weitere Möglichkeit besteht darin, die Kohlenstoffpartikel mittels Elektrostatik auf die zu behandelnde Oberfläche aufzubringen, was anstelle oder ergänzend zu einem der vorgenannten Verfahren erfolgen kann. Um die elektrostatische Anziehung auszunutzen, kann die zu behandelnde Oberfläche mit einem Überschuss an positiver oder negativer Ladung und können die Kohlenstoffpartikel mit einem entgegengesetzten Ladungsüberschuss versehen werden. Dann werden die zu behandelnde Oberfläche und die Kohlenstoffpartikel zusammengebracht, die sich dann infolge der jeweils entgegengesetzten Ladungsüberschüsse anziehen, so dass die Kohlenstoffpartikel an der Oberfläche haften bleiben.

Unter Halbzeugen werden typischerweise solche Bauteile bezeichnet, bei denen es sich nicht um die unter Verwendung von den Halbzeugen herzustellenden Erzeugnisse oder Endprodukte handelt. Halbzeuge werden daher auch als Werkstücke oder Halbfabrikate bezeichnet. Vorliegend ist bei der Verwendung der Bezeichnung Halbzeug jedoch zu berücksichtigen, dass die Unterschiede zwischen den Begriffen Halbzeug und Erzeugnisse oder Endprodukte einerseits sowie zwischen den Begriffen Halbzeugelement, Elektrodenelement, Bipolarelement und Wärmetauscherelement fließend sind. Bei einem Halbzeugelement kann es sich beispielsweise um ein noch nicht fertiges Elektrodenelement, Bipolarelement und Wärmetauscherelement handeln, das noch wenigstens ein weiterer Produktionsschritt benötigt, um als fertiges Elektrodenelement, Bipolarelement und Wärmetauscherelement eingesetzt werden zu können, und zwar unabhängig von einem Hydrophilieren einer Oberfläche. Der Schritt des Hydrophilierens kann als weiterer Produktionsschritt notwendig werden.

Ein Halbzeugelement kann vorliegend aber auch ein Elektrodenelement, Bipolarelement und Wärmetauscherelement sein, das als solches grundsätzlich bereits einsetzbar wäre. Ist jedoch trotzdem der Schritt des Hydrophilierens durch das Aufbringen von Kohlenstoffpartikeln noch nicht erfolgt, benötigt das entsprechende Bauteil diesen Schritt des Hydrophilierens noch um zu einem erfindungsgemäßen Elektrodenelement, Bipolarelement und Wärmetauscherelement zu werden bzw. um das erfindungsgemäße Verfahren abzuschließen. Es handelt sich bei den entsprechenden Bauteilen also um Halbzeugelemente und weniger um Elektrodenelemente, Bipolarelemente und Wärmetauscherelemente, da diese einen Fertigungsschritt noch nicht durchlaufen sind, obwohl entsprechenden Bauteile gleichwohl als Elektrodenelemente, Bipolarelemente und Wärmetauscherelemente einsetzbar wären, auch wenn dabei Nachteile in Kauf genommen werden müssten.

Dem Fachmann sind diese Zusammenhänge ersichtlich. Zudem ist dem Fachmann anhand des Kontextes klar erkennbar, was jeweils im Einzelnen mit einem Halbzeugelement gemeint ist. Der Fachmann kann also beispielsweise und bedarfsweise erkennen, ob es sich bei dem Halbzeugelement um ein bereits für die bestimmungsgemäße Verwendung einsetzbares Halbzeugelement handeln kann, muss oder nicht darf. Der Fachmann kann ebenso beispielsweise und bedarfsweise erkennen, ob es sich bei dem Elektrodenelement, Bipolarelement und Wärmetauscherelement um ein Halbzeugelement handeln kann, muss oder nicht darf.

Der besseren Verständlichkeit halber und zur Vermeidung unnötiger Wiederholungen werden nachfolgend zudem die Verfahren, das Elektrodenelement und die elektrochemische Zelle gemeinsam beschrieben, ohne jeweils im Einzelnen zwischen den Verfahren, dem Elektrodenelement und der elektrochemische Zelle zu unterscheiden. Für den Fachmann ist jedoch anhand des Kontextes jeweils ersichtlich, welches Merkmal jeweils in Bezug auf die Verfahren, das Elektrodenelement und die elektrochemische Zelle besonders bevorzugt ist.

Bei einer ersten besonders bevorzugten Ausgestaltung des Verfahrens werden nach dem Aufbringen von Kohlenstoffpartikeln durch Einreiben, Druckgasstrahlen und/oder durch Elektrostatik die überschüssigen Kohlenstoffpartikel durch Abklopfen, Rütteln, Abblasen, Abwaschen und/oder Abwischen wenigstens überwiegend von der wenigstens einen Oberfläche entfernt. Auf diese Weise können die Kohlenstoffpartikel, die infolge des Aufbringens der Kohlenstoffpartikel keine hinreichend feste Verbindung mit der Oberfläche eingegangen sind, leicht wieder von der Oberfläche entfernt werden. Die entfernten Kohlenstoffpartikel können dann zur Behandlung einer weiteren Oberfläche wiederverwendet werden und/oder die entfernten Kohlenstoffpartikel beeinträchtigen nicht die weitere Verwendung des hydrophilierten Elektrodenelements, Bipolarelements und/oder Wärmetauscherelements.

Besonders zweckmäßig für die Hydrophilierung der zu behandelnden Oberfläche lassen sich als Kohlenstoffpartikel Graphit, Graphen, Carbon Nano Tubes (CNT), Ruß und/oder Kohlenstoffasern einsetzen. Diese Partikel sind zwar selbst hydrophob, erzeuegn jedoch beim Aufbringen auf die zu hydrophilierende Oberflläche eine sehr grute Benetzbarkeit. Zudem sind diese Kohlenstoffpartikel kostengünstig zu beschaffen und einfach handzuhaben.

Um ein geeignetes Gefüge bzw. ein geeigneten Kristallisationsgrad des wenigstens einen thermoplastischen und/oder des wenigstens einen duroplastischen Kunststoffs, insbesondere der hydrophilierten Oberfläche, nach dem Aufbringen der Kohlenstoffpartikel auf die zu behandelnde Oberfläche zu erhalten, erfolgt das Hydrophilieren der zu behandelnde Oberfläche mit Kohlenstoffpartikeln vorzugsweise bei einer Temperatur zwischen 0 °C und 50 °C. Vielfach wird jedoch je nach dem Verwendeten Kunststoff eine Temperatur zwischen 5 °C und 40°C, insbesondere zwischen 10 °C und 30 °C, besonders bevorzugt sein.

Die Benetzbarkeit der zu behandelnden Oberfläche wird in besonderem Maße durch das Aufbringen der Kohlenstoffpartikel gesteigert, wenn nach dem Aufbringen auf die hydrophilierte Oberfläche, insbesondere nach dem Entfernen der Kohlenstoffpartikel von der hydrophilierten Oberfläche, das Flächengewicht von den Kohlenstoffpartikeln der Oberfläche wenigstens bereichsweise weniger als 10.000 mg/m², vorzugsweise weniger als 1.000 mg/m², insbesondere weniger als 500 mg/m², beträgt.

Es wirkt sich auch grundsätzlich positiv aus, wenn die Kohlenstoffpartikel verhältnismäßig klein sind. So wird eine gute Benetzbarkeit erhalten, wenn wenigstens 90 Gew,-% der Kohlenstoffpartikel kleiner als 100 µm, vorzugsweise kleiner als 10 µm, insbesondere kleiner 0,1 µm, sind.

Es wirkt sich aber grundsätzlich auch positiv aus, wenn die Kohlenstoffpartikel eine große spezifische Oberfläche aufweisen. So sind Kohlenstoffpartikel mit einer BET-Oberfläche zwischen 50 m²/g und 10.000 m²/g, vorzugsweise zwischen 250 m²/g und 2.500 m²/g, insbesondere zwischen 500 m²/g und 1800 m²/g, besonders bevorzugt.

Ebenso sind solche Kohlenstoffpartikel besonders geeignet, um die Benetzbarkeit zu steigern, die eine Öl-Adsorptionszahl (ISO 4656:2012-07) zwischen 10 ml/100 g und 1000 ml/100 g, insbesondere zwischen 50 ml/100 g und 500 ml/100 g, insbesondere zwischen 100 ml/100 g und 300 ml/100 g, aufweisen.

Als der wenigstens eine thermoplastische Kunstsoff kann alternativ oder zusätzlich ein Kunststoff aus der Gruppe der Polyolefine (z.B. Polyethylen (PE), Polypropylen (PP)), Polysulfide und -sulfone (z.B. Polyphenylensulfid (PPS), Polysulfon (PSU)), Polyaryletherketone (z.B. Polyetherketon (PEK) und Polyetheretherketon (PEEK)) und/oder Fluorkunststoffe (z.B. Polytetrafluorethylen (PTFE), Polyvinylidenfluorid (PVDF)) verwendet werden. Diese Kunststoffe lassen sich zudem gut mit dem Kohlenstoffpartikeln behandeln. Im Übrigen kann die Benetzbarkeit dieser recht hydrophoben Kunststoffe durch das beschriebene Verfahren in besonderem Maße gesteigert werden.

Als der wenigstens eine duroplastische Kunstsoff kann zudem bevorzugt ein Kunststoff aus der Gruppe der Reaktionsharze (z.B. ungesättigte Polyesterharze (UP-Harze), Epoxidharze (EP-Harze), Isocyanatharze, Methacrylatharze (MA-Harze), Phenacrylatharze (PHA-Harze) und/oder Kondensationsharzen (z.B. Phenolharze, Aminoharze, Polyesterharze) verwendet werden.

Eine geeignete elektrische oder thermische Leitfähigkeit einerseits sowie eine gute Benetzbarkeit andererseits kann für solche Elektrodenelemente, Bipolarelemente und/oder Wärmetauscherelemente erhalten werden, die einen Anteil an einem, insbesondere elektrisch leitfähigen, Füllstoff von zwischen 25 Vol.-% und 97 Vol.-%, vorzugsweise zwischen 45 Vol.-% und 88 Vol.-%, insbesondere zwischen 53 Vol.-% und 70 Vol.-%, des Kunststoffverbundmaterials aufweisen.

Dabei ist es der Eigenschaften der Elektrodenelemente, Bipolarelemente und/oder Wärmetauscherelemente wegen besonders bevorzugt, wenn der wenigstens eine Füllstoff wenigstens im Wesentlichen den Kohlenstoffpartikeln entspricht. Dies gilt in besonderem Maße, wenn es sich bei den Kohlenstoffpartikeln um Graphit, Graphen, Carbon Nano Tubes, Ruß und/oder Kohlenstoffasern handelt. Es handelt sich also vorzugsweise um ein wenigstens im Wesentlichen ähnliches Material. Alternativ oder zusätzlich Füllstoff und Kohlenstoffpartikel auch Unterschiede hinsichtlich der Partikelgröße, der BET-Oberfläche, der Öl-Adsorptionszahl, der Zusammensetzung oder dergleichen aufweisen. Besonders zweckmäßig ist es dabei, wenn wenigstens eine Füllstoff des Kunststoffverbundmaterials als Kohlenstoffpartikel ausgebildet ist.

Besonders kommen die zuvor genannten Vorteile des Hydrophilierens zum Tragen, wenn das Elektrodenelement eine Elektrodenplatte, das Bipolarelement eine Bipolarplatte und/oder das Wärmetauscherelements ein Wärmetauscherrohr oder eine Wärmetauscherplatte ist. Entsprechenden Bauteilen profitieren von einer hydrophileren Oberfläche, werden weit verbreitet eingesetzt und lassen sich auch leicht hydrophilieren.

Die Benetzbarkeit wirkt sich dabei insbesondere auch dann vorteilhaft aus, wenn das Elektrodenelement ein Elektrodenelement einer Redox-Flow-Batterie ist oder wenn das Bipolarelement ein Bipolarelement einer Redox-Flow-Batterie ist. Bei diesen Bauteilen kommt es auf eine gute Benetzbarkeit an, um Redox-Flow-Batterien mit hohen Leistungsdichten zu erzeugen.

Nachfolgend wird die Erfindung anhand einer lediglich Ausführungsbeispiele darstellenden Zeichnung näher erläutert. In der Zeichnung zeigt
- Fig. 1: das erfindungsgemäße Hydrophilieren einer Oberfläche eines Halbzeugelements durch Einreiben in einer schematischen Seitenansicht,
- Fig. 2: das erfindungsgemäße Hydrophilieren einer Oberfläche eines Halbzeugelements durch Druckgasstrahlen in einer schematischen Seitenansicht und
- Fig. 3: das erfindungsgemäße Hydrophilieren einer Oberfläche eines Halbzeugelements durch Elektrostatik in einer schematischen Seitenansicht.

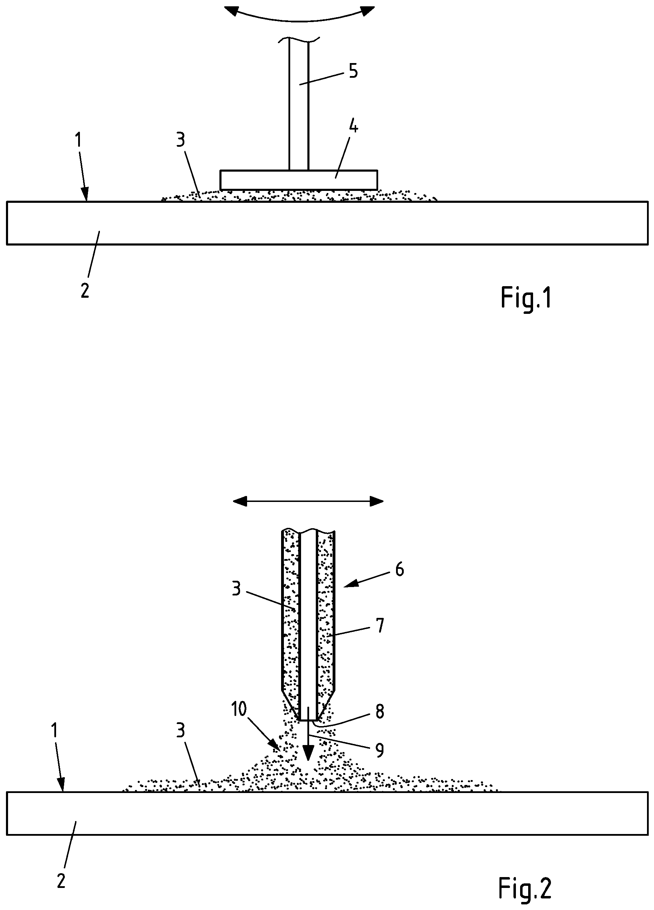

In der Fig. 1 ist ein Verfahren zum Hydrophilieren einer zu behandelnden Oberfläche 1 eines flächigen Halbzeugelements 2, insbesondere eines Elektrodenelements, Bipolarelements und/oder Wärmetauscherelements, durch Einreiben von Kohlenstoffpartikel 3, insbesondere in Form von Graphit, Graphen, Carbon Nano Tubes, Ruß und/oder Kohlenstoffasern, schematisch dargestellt. Dazu wird ein Reibelement 4, etwa in Form eines Stempels oder Tellers über die zu behandelnde Oberfläche 1 bewegt und zwar vorzugsweise hin und her, wobei sich kreisende Bewegungen besonders anbieten. Der Einfachheit halber kann das Reibelement 4 motorisch angetrieben und über ein Stabelement 5 mit dem nicht dargestellten Antrieb verbunden sein. In einer möglichen Ausgastalung können über ein hohles Stabelement 5 und eine mittlere Öffnung im Reibelement 4 die einzureibenden Kohlenstoffpartikel 3 zur zu behandelnden Oberfläche 1 geleitet werden. Die unter einem vorzugsweise einstellbaren Druck von dem Reibelement 4 auf die zu behandelnde Oberfläche 1 aufgetragenen Kohlenstoffpartikel 3 dringen teilweise in den Kunststoff der Oberfläche 1 ein und bleiben so an der Oberfläche 1 haften.

In der Fig. 2 ist ein Verfahren zum Hydrophilieren einer zu behandelnden Oberfläche 1 eines flächigen Halbzeugelements 2, insbesondere eines Elektrodenelements, Bipolarelements und/oder Wärmetauscherelements, durch Druckgasstrahlen von Kohlenstoffpartikel 3, insbesondere in Form von Graphit, Graphen, Carbon Nano Tubes, Ruß und/oder Kohlenstoffasern, schematisch dargestellt. Dabei wird eine Zweistoffdüse 6 über die zu behandelnde Oberfläche 1 bewegt und zwar vorzugsweise hin und her, wobei sich kreisende Bewegungen besonders anbieten. Über die Zweistoffdüse 6 werden über einen äußeren Ringkanal 7 die Kohlenstoffpartikel 3 herangeführt, die von einer über eine zentrale Öffnung 8 ausströmenden Druckgasströmung 9, insbesondere von einer Druckluftströmung, mitgerissen werden. Au diese Weise wird ein Strahl 10 von Kohlenstoffpartikeln 3 erzeugt, der mit hoher Geschwindigkeit auf die zu behandelnde Oberfläche 1 aufschlägt, so dass die auf diese Weise aufgetragenen Kohlenstoffpartikel 3 teilweise in den Kunststoff der Oberfläche 1 eindringen und so an der Oberfläche 1 haften bleiben.

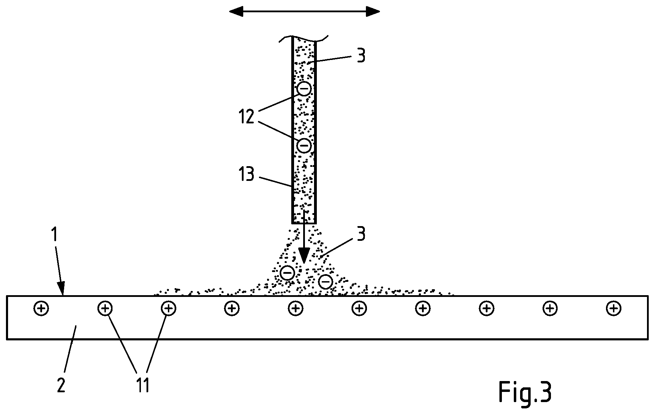

In der Fig. 3 ist ein Verfahren zum Hydrophilieren einer zu behandelnden Oberfläche 1 eines flächigen Halbzeugelements 2, insbesondere eines Elektrodenelements, Bipolarelements und/oder Wärmetauscherelements, durch elektrostatische Anziehung von Kohlenstoffpartikel 3, insbesondere in Form von Graphit, Graphen, Carbon Nano Tubes, Ruß und/oder Kohlenstoffasern, schematisch dargestellt. Dabei wird zunächst die zu behandelnde Oberfläche 1 des Halbzeugelements 2 mit einer Ladung, hier einer positiven Ladung 11 beaufschlagt, welche für einen positiven Ladungsüberschuss an der Oberfläche 1 des Halbzeugelements 2 sorgt. Die Kohlenstoffpartikel 3 sind dagegen mit einer negativen Ladung 12 beaufschlagt und in einen Kanal 13 eingeleitet worden aus dem die Kohlenstoffpartikel 3 infolge der Potentialdifferenz herausrieseln und teilweise elektrostatisch an der zu hydrophilierenden Oberfläche 1 haften bleiben. Um die Kohlenstoffpartikel 3 flächig auf die Oberfläche 1 aufzutragen, kann der Kanal 13 mit den Kohlenstoffpartikeln 3 über die zu behandelnde Oberfläche 1 bewegt werden, und zwar vorzugsweise hin und her, wobei sich kreisende Bewegungen besonders anbieten.

## Patentansprüche

1. Verfahren zum Hydrophilieren eines Halbzeugelements (2), insbesondere Elektrodenelements, Bipolarelements und/oder Wärmetauscherelements, aus einem Kunststoffmaterial oder Kunststoffverbundmaterial enthaltend wenigstens einen thermoplastischen und/oder wenigstens einen duroplastischen Kunststoff,
- bei dem das Hydrophilieren wenigstens teilweise durch Aufbringen von Kohlenstoffpartikeln (3) wenigstens bereichsweise auf wenigstens eine Oberfläche (1) des Halbzeugelements (2) bewirkt wird und
- bei dem die Kohlenstoffpartikel (3) durch Einreiben, Druckgasstrahlen und/oder durch Elektrostatik derart wenigstens bereichsweise auf die wenigstens eine Oberfläche (1) aufgebracht werden, dass die Kohlenstoffpartikel (3) an der Oberfläche (1) haften bleiben.

2. Verfahren nach Anspruch 1,
bei dem nach dem Aufbringen von Kohlenstoffpartikeln (3) auf die wenigstens eine Oberfläche (1) zum Hydrophilieren des Halbzeugelements (2) die überschüssigen Kohlenstoffpartikel durch Abklopfen, Rütteln, Abblasen, Abwaschen und/oder Abwischen wenigstens überwiegend von der wenigstens einen Oberfläche (1) entfernt werden.

3. Verfahren nach einem der Ansprüche 1 oder 2,
bei dem Kohlenstoffpartikel (3) zum Hydrophilieren in Form von Graphit, Graphen, Carbon Nano Tubes, Ruß und/oder Kohlenstoffasern verwendet werden.

4. Verfahren nach einem der Ansprüche 1 bis 3,
bei dem das Hydrophilieren mit Kohlenstoffpartikeln (3) bei einer Temperatur zwischen 0 °C und 50 °C, vorzugsweise zwischen 5 °C und 40°C, insbesondere zwischen 10 °C und 30 °C, erfolgt.

5. Verfahren nach einem der Ansprüche 1 bis 4,
bei dem nach dem Aufbringen der Kohlenstoffpartikel (3) auf die wenigstens eine zu hydrophilierende Oberfläche (1), insbesondere nach dem Entfernen der Kohlenstoffpartikel (3) von der hydrophilierten Oberfläche (1), das Flächengewicht der Kohlenstoffpartikel (3) an der Oberfläche wenigstens bereichsweise weniger als 10.000 mg/m², vorzugsweise weniger als 1.000 mg/m², insbesondere weniger als 500 mg/m², beträgt.

6. Verfahren nach einem der Ansprüche 1 bis 5,
bei dem wenigstens 90 Gew,-% der Kohlenstoffpartikel (3) kleiner als 100 µm, vorzugsweise kleiner als 10 µm, insbesondere kleiner 0,1 µm, sind.

7. Verfahren nach einem der Ansprüche 1 bis 6,
bei dem die Kohlenstoffpartikel (3) eine BET-Oberfläche zwischen 50 m²/g und 10.000 m²/g, vorzugsweise zwischen 250 m²/g und 2.500 m²/g, insbesondere zwischen 500 m²/g und 1800 m²/g, aufweisen.

8. Verfahren nach einem der Ansprüche 1 bis 7,
bei dem die Öl-Adsorptionszahl (ISO 4656:2012-07) der Kohlenstoffpartikel (3) zwischen 10 ml/100 g und 1000 ml/100 g, insbesondere zwischen 50 ml/100 g und 500 ml/100 g, insbesondere zwischen 100 ml/100 g und 300 ml/100 g, beträgt.

9. Verfahren nach einem der Ansprüche 1 bis 8,
bei dem der wenigstens eine thermoplastische Kunststoff aus der Gruppe der Polyolefine (z.B. Polyethylen (PE), Polypropylen (PP)), Polysulfide und -sulfone (z.B. Polyphenylensulfid (PPS), Polysulfon (PSU)), Polyaryletherketone (z.B. Polyetherketon (PEK) und Polyetheretherketon (PEEK)) und/oder Fluorkunststoffe (z.B. Polytetrafluorethylen (PTFE), Polyvinylidenfluorid (PVDF)) ausgewählt wird und/oder bei dem der wenigstens eine duroplastische Kunststoff aus der Gruppe der Reaktionsharze (z.B. ungesättigte Polyesterharze (UP-Harze), Epoxidharze (EP-Harze), Isocyanatharze, Methacrylatharze (MA-Harze), Phenacrylatharze (PHA-Harze) und/oder Kondensationsharzen (z.B. Phenolharze, Aminoharze, Polyesterharze) ausgewählt wird.

10. Verfahren nach einem der Ansprüche 1 bis 9,
bei dem zwischen 25 Vol.-% und 97 Vol.-%, vorzugsweise zwischen 45 Vol.-% und 88 Vol.-%, insbesondere zwischen 53 Vol.-% und 70 Vol.-%, des Kunststoffverbundmaterials durch einen, vorzugsweise elektrisch leitfähigen, Füllstoff gebildet wird.

11. Verfahren nach einem der Ansprüche 1 bis 10,
- bei dem als der wenigstens eine Füllstoff des Kunststoffverbundmaterials Kohlenstoffpartikel (3), insbesondere in Form von Graphit, Graphen, Carbon Nano Tubes, Ruß und/oder Kohlenstoffasern verwendet werden und
- bei dem, vorzugsweise, der Füllstoff den Kohlenstoffpartikeln (3) zum Hydrophilieren der wenigstens einen Oberfläche (1) des Halbzeugelements (2) entspricht.

12. Verfahren zum Herstellen eines Elektrodenelements, insbesondere einer Elektrodenplatte, eines Bipolarelements, insbesondere einer Bipolarplatte, und/oder eines Wärmetauscherelements, insbesondere eines Wärmetauscherrohrs oder einer Wärmetauscherplatte, aus einem Halbzeugelement (2),
- bei dem ein nach einem der Ansprüche 1 bis 11 hydrophiliertes Halbzeugelement (2) zu einem Elektrodenelement, insbesondere einer Elektrodenplatte, einem Bipolarelement, insbesondere einer Bipolarplatte, und/oder einem Wärmetauscherelement, insbesondere einem Wärmetauscherrohr oder einer Wärmetauscherplatte, weiterverarbeitet wird und/oder
- bei dem ein Halbzeugelement (2) zu einem Elektrodenelement, insbesondere einer Elektrodenplatte, einem Bipolarelement, insbesondere einer Bipolarplatte, und/oder einem Wärmetauscherelement, insbesondere einem Wärmetauscherrohr oder einer Wärmetauscherplatte, weiterverarbeitet und anschließend nach einem der Ansprüche 1 bis 11 hydrophiliert wird.

13. Verfahren nach Anspruch 12,
- bei dem das Elektrodenelement ein Elektrodenelement einer elektrochemischen Zelle, insbesondere einer Redox-Flow-Batterie ist oder
- bei dem das Bipolarelement ein Bipolarelement einer elektrochemischen Zelle, insbesondere einer Redox-Flow-Batterie ist.

14. Elektrodenelement, insbesondere Elektrodenplatte, Bipolarelement, insbesondere Bipolarplatte, und/oder Wärmetauscherelement, insbesondere Wärmetauscherrohr oder Wärmetauscherplatte, hergestellt nach Anspruch 12 oder 13.

15. Elektrochemische Zelle, insbesondere Redox-Flow-Batterie, mit einem Elektrodenelement, insbesondere Elektrodenplatte, oder mit einem Bipolarelement, insbesondere Bipolarplatte, nach Anspruch 14.

## Claims

1. A method for hydrophilizing a semi-finished element (2), in particular an electrode element, a bipolar element, and/or a heat exchanger element, made of a plastic material or a plastic composite material containing at least one thermoplastic and/or at least one thermosetting plastic,
- in which the hydrophilization is effected at least partially by applying carbon particles (3) at least in certain areas to at least one surface (1) of the semi-finished element (2) and
- in which the carbon particles (3) are applied at least in certain areas to the at least one surface (1) by rubbing, compressed gas blasting, and/or electrostatic means in such a way that the carbon particles (3) adhere to the surface (1).

2. A method according to claim 1,
in which, after applying carbon particles (3) to the at least one surface (1) to hydrophilize the semi-finished element (2), the excess carbon particles are removed at least predominantly from the at least one surface (1) by tapping, shaking, blowing off, washing off, and/or wiping off.

3. A method according to any of claims 1 or 2,
in which carbon particles (3) for hydrophilization are used in the form of graphite, graphene, carbon nanotubes, soot, and/or carbon fibers.

4. A method according to any one of claims 1 to 3,
in which the hydrophilization with carbon particles (3) is carried out at a temperature between 0 °C and 50 °C, preferably between 5 °C and 40 °C, and in particular between 10 °C and 30 °C.

5. A method according to any one of claims 1 to 4,
in which, after applying the carbon particles (3) to the at least one surface (1) to be made hydrophilic, in particular after removing the carbon particles (3) from the hydrophilized surface (1), the areal weight of the carbon particles (3) on the surface is, at least in some areas, less than 10,000 mg/m², preferably less than 1,000 mg/m², and in particular less than 500 mg/m².

6. A method according to any one of claims 1 to 5,
in which at least 90 wt% of the carbon particles (3) are smaller than 100 µm, preferably smaller than 10 µm, in particular smaller than 0.1 µm.

7. A method according to any one of claims 1 to 6,
in which the carbon particles (3) have a BET surface area between 50 m²/g and 10,000 m²/g, preferably between 250 m²/g and 2,500 m²/g, in particular between 500 m²/g and 1,800 m²/g.

8. A method according to any one of claims 1 to 7,
in which the oil adsorption index (ISO 4656:2012-07) of the carbon particles (3) is between 10 ml/100 g and 1,000 ml/100 g, in particular between 50 ml/100 g and 500 ml/100 g, in particular between 100 ml/100 g and 300 ml/100 g.

9. A method according to any one of claims 1 to 8,
in which the at least one thermoplastic is selected from the group consisting of polyolefins (e.g., polyethylene (PE), polypropylene (PP)), polysulfides and polysulfones (e.g., polyphenylene sulfide (PPS), polysulfone (PSU)), polyaryletherketones (e.g., polyetherketone (PEK) and polyetheretherketone (PEEK)), and/or fluoroplastics (e.g., polytetrafluoroethylene (PTFE), polyvinylidene fluoride (PVDF)), and/or wherein the at least one thermosetting plastic is selected from the group of reaction resins (e.g., unsaturated polyester resins (UP resins), epoxy resins (EP resins), isocyanate resins, methacrylate resins (MA resins), phenylacrylate resins (PHA resins), and/or condensation resins (e.g., phenolic resins, amino resins, polyester resins).

10. A method according to any one of claims 1 through 9,
in which between 25 vol.% and 97 vol.%, preferably between 45 vol.% and 88 vol.%, and in particular between 53 vol.% and 70 vol.%, of the plastic composite material is formed by a filler, preferably an electrically conductive filler.

11. A method according to any one of claims 1 to 10,
- in which carbon particles (3), in particular in the form of graphite, graphene, carbon nanotubes, carbon black, and/or carbon fibers, are used as the at least one filler of the plastic composite material, and
- in which, preferably, the filler corresponds to the carbon particles (3) for hydrophilizing the at least one surface (1) of the semi-finished element (2).

12. A method for manufacturing an electrode element, in particular an electrode plate, a bipolar element, in particular a bipolar plate, and/or a heat exchanger element, in particular a heat exchanger tube or a heat exchanger plate, from a semi-finished element (2),
- in which a semi-finished element (2) hydrophilized according to one of claims 1 to 11 is further processed into an electrode element, in particular an electrode plate, a bipolar element, in particular a bipolar plate, and/or a heat exchanger element, in particular a heat exchanger tube or a heat exchanger plate, and/or
- in which a semi-finished element (2) is further processed into an electrode element, in particular an electrode plate, a bipolar element, in particular a bipolar plate, and/or a heat exchanger element, in particular a heat exchanger tube or a heat exchanger plate, and is subsequently hydrophilized according to one of claims 1 to 11.

13. A method according to claim 12,
- in which the electrode element is an electrode element of an electrochemical cell, in particular a redox flow battery, or
- in which the bipolar element is a bipolar element of an electrochemical cell, in particular a redox flow battery.

14. Electrode element, in particular an electrode plate, bipolar element, in particular a bipolar plate, and/or heat exchanger element, in particular a heat exchanger tube or heat exchanger plate, manufactured according to claim 12 or 13.

15. An electrochemical cell, in particular a redox flow battery, comprising an electrode element, in particular an electrode plate, or a bipolar element, in particular a bipolar plate, according to claim 14.

## Revendications

1. Procédé d'hydrophilisation d'un élément semi-fini (2), en particulier d'un élément d'électrode, d'un élément bipolaire et/ou d'un élément d'échangeur de chaleur, constitué d'une matière plastique ou d'un matériau composite plastique contenant au moins une matière thermoplastique et/ou au moins une matière thermodurcissable,
- dans lequel l'hydrophilisation est réalisée au moins en partie par l'application de particules de carbone (3) au moins par zones sur au moins une surface (1) de l'élément semi-fini (2) et
- dans lequel les particules de carbone (3) sont appliquées au moins par zones sur ladite au moins une surface (1) par frottement, par projection de gaz sous pression et/ou par électrostatique, de telle sorte que les particules de carbone (3) adhèrent à la surface (1).

2. Procédé selon la revendication 1,
dans lequel, après l'application de particules de carbone (3) sur la au moins une surface (1) en vue de l'hydrophilisation de l'élément semi-fini (2), les particules de carbone en excès sont éliminées, au moins en grande partie, de la au moins une surface (1) par tapotement, secouage, soufflage, lavage et/ou essuyage.

3. Procédé selon l'une des revendications 1 ou 2,
dans lequel des particules de carbone (3) sont utilisées pour l'hydrophilisation sous forme de graphite, de graphène, de nanotubes de carbone, de noir de carbone et/ou de fibres de carbone.

4. Procédé selon l'une des revendications 1 à 3,
dans lequel l'hydrophilisation à l'aide de particules de carbone (3) s'effectue à une température comprise entre 0 °C et 50 °C, de préférence entre 5 °C et 40 °C, en particulier entre 10 °C et 30 °C.

5. Procédé selon l'une des revendications 1 à 4,
dans lequel, après l'application des particules de carbone (3) sur la au moins une surface (1) à rendre hydrophile, en particulier après l'élimination des particules de carbone (3) de la surface (1) rendue hydrophile, le grammage des particules de carbone (3) sur la surface est, au moins par endroits, inférieur à 10 000 mg/m², de préférence inférieur à 1 000 mg/m², en particulier inférieur à 500 mg/m².

6. Procédé selon l'une des revendications 1 à 5,
dans lequel au moins 90 % en poids des particules de carbone (3) ont une taille inférieure à 100 µm, de préférence inférieure à 10 µm, en particulier inférieure à 0,1 µm.

7. Procédé selon l'une des revendications 1 à 6,
dans lequel les particules de carbone (3) présentent une surface spécifique BET comprise entre 50 m²/g et 10 000 m²/g, de préférence entre 250 m²/g et 2 500 m²/g, en particulier entre 500 m²/g et 1 800 m²/g.

8. Procédé selon l'une des revendications 1 à 7,
dans lequel l'indice d'adsorption d'huile (ISO 4656:2012-07) des particules de carbone (3) est compris entre 10 ml/100 g et 1 000 ml/100 g, en particulier entre 50 ml/100 g et 500 ml/100 g, en particulier entre 100 ml/100 g et 300 ml/100 g.

9. Procédé selon l'une des revendications 1 à 8,
dans lequel la au moins une matière thermoplastique est choisie parmi le groupe des polyoléfines (par exemple le polyéthylène (PE), le polypropylène (PP)), des polysulfures et des polysulfones (par exemple le sulfure de polyphénylène (PPS), le polysulfone (PSU)), des polyaryléthercétones (par exemple le polyéthercétone (PEK) et le polyétheréthercétone (PEEK)) et/ou des plastiques fluorés (par exemple le polytétrafluoroéthylène (PTFE), polyfluorure de vinylidène (PVDF)), et/ou dans lequel la au moins une matière thermodurcissable est choisie parmi le groupe des résines de réaction (par exemple les résines polyester insaturées (résines UP), les résines époxy (résines EP), les résines isocyanates, les résines méthacrylates (résines MA), résines phénacrylates (résines PHA) et/ou des résines de condensation (par exemple, résines phénoliques, résines aminées, résines polyester).

10. Procédé selon l'une des revendications 1 à 9,
dans lequel entre 25 % en volume et 97 % en volume, de préférence entre 45 % en volume et 88 % en volume, en particulier entre 53 % en volume et 70 % en volume, du matériau composite plastique est constitué d'une charge, de préférence électroconductrice.

11. Procédé selon l'une des revendications 1 à 10,
- dans lequel on utilise, comme au moins une charge du matériau composite plastique, des particules de carbone (3), notamment sous forme de graphite, de graphène, de nanotubes de carbone, de noir de carbone et/ou de fibres de carbone, et
- dans lequel, de préférence, la charge correspond aux particules de carbone (3) pour l'hydrophilisation de la au moins une surface (1) de l'élément semi-fini (2).

12. Procédé de fabrication d'un élément d'électrode, en particulier d'une plaque d'électrode, d'un élément bipolaire, en particulier d'une plaque bipolaire, et/ou d'un élément d'échangeur de chaleur, en particulier d'un tube d'échangeur de chaleur ou d'une plaque d'échangeur de chaleur, à partir d'un élément semi-fini (2),
- dans lequel un élément semi-fini (2) hydrophilisé selon l'une des revendications 1 à 11 est transformé en un élément d'électrode, en particulier une plaque d'électrode, un élément bipolaire, en particulier une plaque bipolaire, et/ou un élément d'échangeur de chaleur, en particulier un tube d'échangeur de chaleur ou une plaque d'échangeur de chaleur, et/ou
- dans lequel un élément semi-fini (2) est transformé en un élément d'électrode, en particulier une plaque d'électrode, un élément bipolaire, en particulier une plaque bipolaire, et/ou un élément d'échangeur de chaleur, en particulier un tube d'échangeur de chaleur ou une plaque d'échangeur de chaleur, puis est hydrophilisé selon l'une des revendications 1 à 11.

13. Procédé selon la revendication 12,
- dans lequel l'élément d'électrode est un élément d'électrode d'une cellule électrochimique, en particulier d'une batterie à flux redox, ou
- dans lequel l'élément bipolaire est un élément bipolaire d'une cellule électrochimique, en particulier d'une batterie à flux redox.

14. Élément d'électrode, en particulier plaque d'électrode, élément bipolaire, en particulier plaque bipolaire, et/ou élément d'échangeur de chaleur, en particulier tube d'échangeur de chaleur ou plaque d'échangeur de chaleur, fabriqué selon la revendication 12 ou 13.

15. Cellule électrochimique, en particulier batterie à flux redox, comprenant un élément d'électrode, en particulier une plaque d'électrode, ou un élément bipolaire, en particulier une plaque bipolaire, selon la revendication 14.
